# EUROPEAN PATENT SPECIFICATION

(11) **EP 4 258 286 B1**
(45) Date of publication and mention of the grant of the patent: **30.10.2024**
(21) Application number: 22305451.1
(22) Date of filing: 04.04.2022
(51) Int. Cl.: G21B 1/13

(54) **LITHIUM HYDRIDE FIRST WALL**
LITHIUMHYDRID-ERSTWAND
PREMIÈRE PAROI EN HYDRURE DE LITHIUM

(43) Date of publication of application: 11.10.2023
(73) Proprietor: Renaissance Fusion, 38600 Fontaine (FR)
(72) Inventor: VOLPE, Francesco, 38600 Fontaine (FR)
(74) Representative: Cabinet Beaumont

(56) References cited:
- WO-A1-2022/106609
- JP-A- H0 882 688
- US-A1- 2008 093 585
- US-B1- 6 411 666
- EVTIKHIN V A ET AL: "Lithium divertor concept and results of supporting experiments", PLASMA PHYSICS AND CONTROLLED FUSION, IOP, BRISTOL, GB, vol. 44, no. 6, 1 June 2002 (2002-06-01), pages 955 - 977, XP002753999, ISSN: 0741-3335, [retrieved on 20020531], DOI: 10.1088/0741-3335/44/6/322

## Description

### Technical field

The present disclosure is related to first wall components in a vessel, such as a plasma confinement vessel, particularly it is related to confinement vessels where a liquid metal is used as a first wall. A first wall means a wall which directly faces the inside of the vessel, and first wall components mean components which directly face the inside if the vessel.

### Background art

The world currently depends heavily on fossil fuels, this dependency creates severe effects on climate, warming and biosphere degradation. The only alternative known to man is nuclear power, and the only one capable of achieving the appropriate safety and fuel efficiency is fusion power.

For fusion power to be an adequate alternative, fusion reactors need to be cheaper and smaller than the devices currently being envisioned, those based on the ITER design and DEMO. There is a need for fusion energy devices that are less complex, cheaper, and faster to construct.

The current devices being envisioned derive themselves from the designs of the 1990s, therefore these designs consider a minimum size with a major radius in the range of 6-9 m. Therefore, the production costs of actual reactors are enormous, prognosticated to over several billion dollars, and the construction time set to several decades with current construction methods. In addition to that, the cost of produced electricity by any power plant is affected by the cost of said power plant, which is approximately proportional to the plant's volume, so bigger machines, even if working on fusion principles would still produce electricity at a higher cost than other smaller machines. For these reasons there is a need for a fusion reactor that is smaller in size but that also has a higher fusion-power-density.

Further, fusion reactors also involve other sources of high costs during operation. One of them are the plasma facing components (PFCs), these are the components that face the plasma in the reaction chamber. PFCs are subject to very high energy during operation and as such the materials need to be replaced frequently. Another cost is that of the fuel, fusion power plants use tritium, a very expensive hydrogen isotope, for which the cost of a single gram may be as high as 30,000 dollars.

Those working in model fusion power plants have had little success in overcoming these difficulties in a way that also allow for reduction of the overall size of the reactor. As an example, ITER rests on 42-hectare platform and is over 70 meters tall. The follow-up reactor, DEMO, is expected to be even bigger with an increase in linear dimensions of about 15%.

The prior art teaches solutions as detailed next, some of them are based on using liquid metal as a plasma facing component. To the best understanding of the inventors these methods present a number of deficiencies that make them unsuitable or insufficient to accomplish the long-term goals of reducing the overall size of fusion reactor and increase the fusion-power density whilst also maintaining low costs.

A review of trends in liquid metals as plasma facing components is "On the exploration of innovative concepts for fusion chamber technology" by Abdou, et al. published in Fusion Engineering and Design 54 (2001) pp. 181-247. Specifically, Abdou notices that there are some possible advantages if concepts become realizable, including: high power density capacity, smaller and lower cost components and improvements in plasma stability and confinement. Abdou describes liquid metal mixtures in a liquid medium including Sn-Li mixtures, Pb-Li mixtures, and the molten salt FLiBe. Abdou also describes how to use these liquid metal mixtures and fashion them into a liquid wall, methods to push the liquid metal into the wall are described, including: gravitymomentum driven, which uses centrifugal force; electromagnetically restrained concept, in which current is injected to the flow so that a force field that pushes the flow to the wall is generated; and other methods that include pressure driving forces. Abdou notices in page 187 that it is not known whether the advantages are realizable into a single concept, and he then writes that even if just a subset of these advantages are achieved, a remarkable progress toward attractiveness of fusion energy systems would be accomplished. Therefore, there is a need for a solution that realistically implements said advantages into a single concept.

In U.S. Pat. No. 4,344,911 to Maniscalco, et. al. a fluidized wall for protecting fusion chamber walls is described. The fluidized wall is described in two ways, as being a liquid lithium metal waterfall or as being a waterfall of solid pellets of lithium-ceramic. The waterfall is described as forming a blanket that protects the structural materials of the chamber. Because the wall is described as using lithium it suffers from being a very poor neutron attenuator. Because the fluid is falling as a waterfall, additional complications from this configuration include open spaces in the waterfall and liquid density issues, which results in an uneven shielding. This is also true of the lithium-ceramic pebbles described.

Another material used for fusion reactor blankets is metal beryllium, having neutron multiplying properties. Pebbles created for this material have been described in, for example U.S. Pat. No. 5,958,105 to Ishitsuka et al. Such pebbles may not be allowed to come in contact with liquid metal mixtures as they may react making the pebbles unsuitable for their neutron multiplying purpose.

Prior art document US 2008/093585 A1 discloses a liquid metal mixture comprising lithium and lithium hydride. Prior art document US 6 411 666 B1 discloses a liquid lithium first wall for a tokamak. Prior art document JP H08 82688 A discloses a liquid metal mixture first wall for a tokamak, the liquid metal mixture comprising liquid Li and suspended lithium-containing particles.

Thus, there remains a need for a solution to the fusion problem that addresses how to build a smaller, lower cost, and higher power density fusion reactors or their components, while still using readily available materials.

### Summary of Invention

One embodiment addresses all or some of the drawbacks of known plasma confinement walls or components.

According to claim 1, the invention provides a first wall adapted to cover an inner wall of a vessel, the first wall being made of a liquid metal mixture comprising at least lithium and lithium hydride, the first wall further comprising pebbles suspended in the liquid metal mixture, each pebble being a neutron attenuating pebble, a neutron multiplying pebble or a neutron attenuating and multiplying pebble.

The first wall further comprises pebbles suspended in the liquid metal mixture, each pebble being a neutron attenuating pebble, a neutron multiplying pebble or a neutron attenuating and multiplying pebble, the pebbles being for example sized between 1 and 5 mm.

In one embodiment, at least one of the pebbles have a core externally coated by an outer shell.

In one embodiment, the core is a hollowed core, for example filled with pores and/or the outer shell is a hollowed shell, for example filled with pores.

In one or several embodiments:
- at least one of the pebbles is a neutron attenuating pebble and the core of said neutron attenuating pebble primarily comprises a material suitable for attenuating neutrons, preferably a material of high atomic number, for example lead; and/or
- at least one of the pebbles is a neutron multiplying pebble and the core of said neutron multiplying pebble primarily comprises a material suitable for multiplying neutrons, for example beryllium; and/or
- the outer shell primarily comprises a material suitable for stopping corrosion and/or interaction between lithium and the core, for example silicon carbide or graphite.

In one embodiment, at least some of the pebbles are located at an outer surface of the liquid metal mixture.

In one embodiment, the mixture further comprises lithium tritide and/or lithium deuteride.

In one embodiment, the mixture comprises between 15 and 25 % in molar content of lithium hydride, lithium tritide and/or lithium deuteride, and the width of the first wall is for example comprised between 60 centimeters and 90 centimeters; or the mixture comprises between 90 % and 98 % in molar content of lithium hydride, lithium tritide and/or lithium deuteride and the width of the first wall is for example comprised between 30 centimeters and 50 centimeters.

One embodiment provides a vessel comprising an inner wall, wherein said inner wall is covered with a first wall according to an embodiment.

One embodiment provides a first wall device adapted to form a first wall according to an embodiment, wherein the device comprises:
- a vessel comprising an inner wall;
- flowing means adapted to form a flow of a liquid metal mixture on the inner wall.

In one embodiment, the flowing means comprises:
- a pump;
- a first tube between the pump and the vessel, the first tube being adapted to injecting the liquid metal mixture over the inner wall, the first tube being for example divided in at least two parts in the vessel; and
- a second tube between the vessel and the pump, the second tube being adapted to collecting the liquid metal mixture flowing over the inner wall, the second tube being for example divided into at least two parts in the vessel.

The flowing means comprise means for adding pebbles to the liquid metal mixture, for example hatchings or access points in a first tube of the flowing means, and may be adapted to circulating the liquid metal mixture at high temperatures, for example at temperatures comprised between 600°C and 900°C.

In one embodiment, the vessel or the device further comprises electrodes located on the inner wall of the vessel, the electrodes being adapted to applying an electric current to the liquid metal mixture of the first wall.

In one embodiment, the vessel or the device further comprises means for generating a magnetic field inside the vessel.

In one embodiment, the vessel has substantially a shape of a torus.

In one embodiment, the vessel forms at least part of a plasma confinement vessel, a nuclear reactor vessel, or an isotopic separation chamber.

According to claim 17, the invention also provides a method adapted to form a first wall according to an embodiment, wherein the method comprises injecting a liquid metal mixture to an inner wall of a vessel, the liquid metal mixture comprising at least lithium and lithium hydride. The method further comprises injecting pebbles in the liquid metal mixture before or during the injection step, each pebble being a neutron attenuating pebble, a neutron multiplying pebble or a neutron attenuating and multiplying pebble.

In one embodiment, the method further comprises:
- applicating an electric current to the liquid metal mixture during the injection step, for example through the use of electrodes located on the inner wall of the vessel;
- applicating a magnetic field in the vessel during the injection step; and/or
- collecting the liquid metal mixture from the vessel, after the injection step, and servicing the collected liquid metal mixture for another injection step in the vessel and/or to another device adapted to extract energy from said collected liquid metal mixture, such as a heat exchanger or a separator.

### Advantages

Advantages of an embodiment of the lithium hydride first wall device may be listed as: allow for much more compact first wall in a fusion reactor, the first wall may be as small as a few centimeters but usually between 10 to 20 cm or more; there is no need for a separate lithium breeding blanket because the first wall also acts as the breeding blanket, it is possible to modify the amount of attenuation or absorption of neutrons, so it is possible to test different configurations easily and to change on the fly the tritium breeding ratio. Therefore, it would be possible to construct smaller fusion reactors if the disclosed liquid first wall is used. Other advantages include the prolonged life-time of the solid parts of the reactor, including structural materials and normal-conducting or superconducting coils, improved safety and reduced maintenance and replacement costs in otherwise highly radioactive environments. Other technical advantages will become apparent to someone skilled in the art from the detailed description, figures, and claims. Moreover, while specific advantages have been enumerated above, different embodiments may include all, none or some of the advantages listed.

### Brief description of drawings

The foregoing features and advantages, as well as others, will be described in detail in the following description of specific embodiments given by way of illustration and not limitation with reference to the accompanying drawings, in which:
FIG. 1 is a general perspective view of an embodiment of the disclosed lithium-hydride first wall.
FIG. 2 is a cross sectional view of a pebble.

### Reference numerals

- 102:: pump
- 104a:: outflow tube (first tube)
- 104b:: inflow tube (second tube)
- 106:: vessel
- 108:: magnetic field
- 110:: pebble
- 111:: liquid metal flow (liquid metal mixture)
- 112:: electrode(s)
- 113:: inner wall(s)
- 114:: outer surface
- 202:: outer shell
- 204:: core
- 206:: pore(s)

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

The following figures are not to scale. It should be noted that the drawings refer to an embodiment of the disclosed lithium hydride first wall, sometimes also referred simply as device, when no ambiguity in the text is anticipated. Other embodiments may be possible, and some are described in the figures as well. The actual dimension and/or shape of each of the components of the embodiment may vary. Only important details of the embodiment are shown, however one of ordinary skill in the art can appreciate how the overall device may be constructed, without undue experimentation. Some details have been omitted from the drawings, but the inventors believe that adding these details is unnecessary for the overall appreciation of the characteristics of the invention disclosed. Some characteristics of the embodiment appear exaggerated to facilitate understanding. The embodiments disclosed, and alternatives observed should not be considered as limiting the invention as defined by the claims.

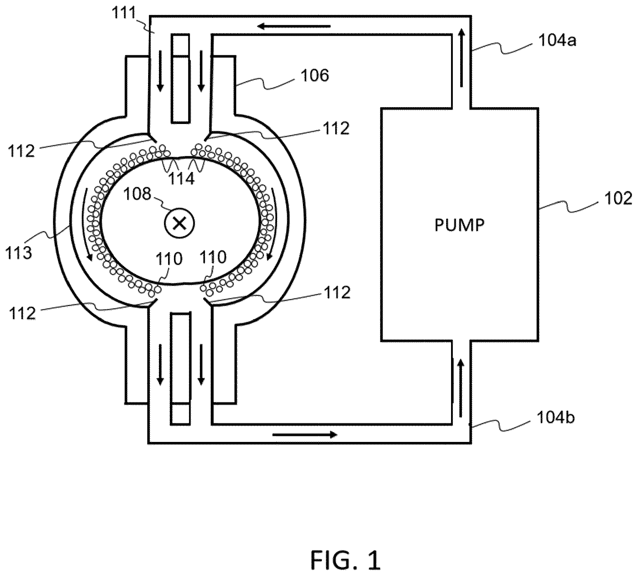

A first embodiment of lithium hydride first wall device is shown in FIG. 1. A pump **102** injects a liquid metal flow **111** (liquid metal mixture) by means of an outflow tube **104a** (first tube) into a vessel **106.** The outflow tube **104a** may be split in two or more so that the liquid metal flow **111** may flow over the inner wall (s) **113** of the vessel **106.** The liquid metal flow **111** may be filled with a plurality of pebbles **110.** The liquid metal flow **111** returns to the pump by means of an inflow tube **104b.** The inflow tube **104b** (second tube) may have a plurality of inlets to collect the liquid metal flow **111** flowing over the inner walls **113** of the vessel **106.**

A plurality of electrodes **112** may be disposed on the inner wall **113** of the vessel **106.** A magnetic field **108** (B) may be applied inside of the vessel **106.** The electrodes may apply a current of density j, resulting in a force of density jxB, which forces the liquid metal flow to stick to the solid wall.

According to an example, the vessel forms at least part of a plasma confinement vessel. In other examples, the vessel may form at least part of a nuclear reactor vessel, or of an isotopic separation chamber.

In the first embodiment, the pump **102** may be fashioned to allow for circulation of high temperature liquid metals. Operating temperatures may be between 600°C and 900°C in fusion reactor applications. The inflow **104a** and outflow **104b** tubes are also adapted to operate at these temperatures. The inflow tube **104a** takes the liquid metal flow **111** pumped from the pump **102** and services it to the inner wall(s) **113** of the vessel **106** from the top. The inner wall(s) **113** of the vessel **106** is (are) covered with the liquid metal flow **111.** As the liquid metal **111** flows over the inner wall(s) **113,** an outer surface **114** on the opposite side of the wall(s) **113** is formed by the liquid metal flow **111.** In order to ensure that the inner wall(s) **113** of the vessel is (are) completely covered, it may be necessary to split the inflow tube **104a** or accommodate for receptacles to divide the flow over the wall. The liquid metal flow **111** is collected at the bottom of the vessel **106** by receptacles that service the outflow tube **104b.** The outflow tube **104b** takes the liquid metal flow **111** back into the pump where it may then be recirculated.

In the first embodiment, the liquid metal flow **111** is primarily composed of a mixture of lithium and lithium hydride and may contain traces of other elements.

In said embodiment, the mixture of lithium and lithium hydride may be composed of at least 15% and at most 25% of lithium hydride, or at least 90% and at most 98%, this composition may be in the sense of molar content. Further, the mixture may contain lithium deuteride and/or lithium tritide. The content of the lithium hydride in the mixture allows for modification of the properties of the liquid metal flow **111.** Changing the molar content of lithium hydride in the mixture modifies the attenuation and absorption properties of the liquid metal flow **111.**

When the lithium hydride content in the mixture is between 15% and 25%, the width of the liquid metal flow **111** as measured from the inner wall(s) **113** of the vessel **106** may be between 60 cm and 90 cm to effect optimum attenuation or absorption as required by the fusion reactor application while also accomplishing tritium breeding at an acceptable rate. When the lithium hydride content in the mixture is between 90% and 98%, the width of the liquid metal flow **111** as measured from the inner wall(s) **113** of the vessel **106** may be between 30 cm and 50 cm to effect optimum attenuation or absorption as required by the fusion reactor application while also accomplishing tritium breeding at an acceptable rate. It should be apparent to anyone proficient in the art that adding lithium tritide and/or lithium deuteride to the mixture produces the same or similar results.

In the first embodiment, the vessel **106** may be shaped like a torus or in another similar shape. This shape would accommodate for fusion reactor applications. In such an embodiment, the inside of the vessel **106** is under the effect of a magnetic field **108.** In FIG. 1, the magnetic field **108** is directed to the outside of the page. The magnetic field may be created by coils outside of the vessel **106** or some other appropriate method according to the application. The vessel **106** also contains a plurality of electrodes **112.** Each of the electrodes **112** may be placed in a different location on the vessel **106** and they may be placed all over the inner wall(s) **113** of the vessel **106.**

The first embodiment includes a plurality of pebbles **110.** The pebbles **110** are added to the liquid metal flow **111** prior to being loaded into the device or during operation. In order to add pebbles **110** during operation, adequate hatchings or access points may be placed in the inflow tubes **104a.** Each pebble **110** may have a different function and two main varieties are identified in this first embodiment. A first variety have the function of attenuation of neutrons and are henceforth called neutron attenuating. A second variety are called neutron multiplying and have the function of multiplying the number of neutrons inside the liquid first wall. The two varieties and their functions can be combined in a single type of pebbles, containing both neutron attenuating materials and neutron multiplying materials, or materials that can simultaneously attenuate neutrons and multiply them, like lead.

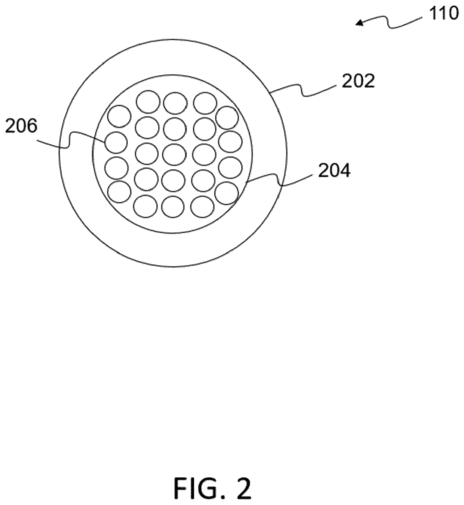

FIG. 2 shows a cross sectional view of a pebble **110.** The cross-sectional view of FIG. 2 is common to both varieties described. Each pebble **110** is constructed out of a core **204,** and externally coated by an outer shell **202.** Pebbles **110** may be constructed in a similar way to packed-bed beads that are common in nuclear fission applications. The outer shell **202** may be a coating of silicon carbide (SiC), graphite or other material suitable for stopping corrosion or interaction between lithium and the core **204.** The core **204** may be of a different material according to the function of the pebble **110.** The core **204** of a neutron attenuating pebble **110** may be constructed with lead or other materials of high atomic number, suitable for attenuating high energy neutrons. The core **204** of a neutron multiplying pebble **110** is constructed out of beryllium or other materials known for being adequate neutron multipliers. In the first embodiment, pebbles **110** may be sized between 1 mm and 5 mm.

The core **204** may be filled by pores **206,** thus making it hollow, which enables making the pebble **110** lighter. Alternatively, or additionally to the presence of pores, the outer shell **202** may be an electrical insulator or a poor conductor, so that the pebble is not or less subject to electromagnetic forces. Therefore, the pebble will not be or be less pushed radially outward. Instead, the pebble may float on the liquid metal-facing side of the vessel, where it is most needed and most effective for attenuation and multiplication of high-energy neutrons.

### Operation

To describe the operation of the disclosed liquid metal first wall, a fusion reactor application will be used. It should be apparent to someone skilled in the art that use in other applications might be profitable, for instance in the nuclear fission reactor field or even in the isotopic separation of elements field.

In the operation of the first embodiment as part of a fusion reactor, a pump **102** injects a liquid metal flow **111** to the inner wall(s) **113** of a vessel **106.** As said, the vessel **106** is shaped like a torus and as such is hollow in the inside. There are pebbles **110** of the neutron attenuating and neutron multiplying variety suspended in the liquid metal **111.** Said liquid metal is a mixture of lithium and lithium hydride and may contain lithium deuteride and/or lithium tritide. Injection is made from the top of the vessel **106.**

The liquid metal flow **111** may preferably be injected with a sufficiently high tangential velocity so that it may adhere to the inner wall(s) **113** by effect of a centrifugal force. Adherence to the inner wall(s) **113** is further maintained by the application of an electric current through the use of electrodes **112.** An electric current is made circulate inside the liquid metal flow **111** in the poloidal direction. A magnetic field **108** is also applied in the toroidal direction. The interaction of the current and the magnetic field **108** causes an electromagnetic force that pushes the liquid metal flow **111** further into the inner wall **113.**

As there are pebbles **110** suspended on the liquid metal flow **111,** the action of the centrifugal and electromagnetic forces creates a situation of artificial gravity resulting in the pebbles **110** floating to the outer surface **114** of the liquid metal flow **111.** This is due either to lower density (obtained by porosity) and/or to the outer shell **202** being an electrical insulator or a poor conductor, thus making the pebbles **110** at least partially immune to electromagnetic forces. The outer surface **114** of the liquid metal flow **111** is the one that faces the inside of the toroidal vessel **106.** In the fusion reactor, a fusion reaction takes place in the inside of the vessel **106.** Neutrons and other particles are ejected with high energy towards the outer surface **114** of the liquid metal flow **111.** Neutrons interact with the pebbles **110,** according to their function they result in attenuation of the neutrons or multiplication of the neutrons. Further, neutrons interact with the lithium and lithium hydride mixture in the liquid metal flow **111** resulting in further absorption and tritium breeding.

The liquid metal flow **111** is at a high temperature after this process. The liquid metal flow **111** is collected at the bottom of the vessel **106.** The outflow tubes **104b** then take the collected liquid metal flow and service other devices. For instance, other embodiments may include a heat exchanger, separators, or combinations of such, so that energy may be extracted from the liquid metal flow **111.** Afterwards, the liquid metal flow is again serviced to the pump **102** and the process may continue.

The tritium breeding characteristics of the disclosed lithium hydride first wall depend on the composition and amount of pebbles **110** and the composition of the lithium hydride mixture in the liquid metal flow **111.** Therefore, by modifying the pebbles **110** or the composition the size of the liquid metal flow **111** may be modified and the size of a vessel **106** that uses the described lithium hydride first wall may be made smaller than what is currently being designed and constructed.

### Additional Embodiments

In an additional embodiment, the lithium hydride content in the liquid metal flow **111** is as high as 90% or even further. In such an embodiment the width of the liquid metal flow **111** when measured from the inner wall **113** may be as low as few millimeters in order to achieve acceptable tritium breeding rates.

In another additional embodiment, the outflow tube **104b** takes the liquid metal flow **111** and delivers it to another device. For instance, this other device could be a heat exchanger that would remove the heat from the liquid metal **111** and exchange it with a different fluid, this could be part of a power generation plant.

In yet another additional embodiment, the pores **206** inside the pebble **110** are not located in the core **204,** but on the outer shell **202.** In yet another embodiment pores **206** are located not only on the core **204** but also in the outer shell **202.**

## Claims

1. A first wall adapted to cover an inner wall (113) of a plasma confinement vessel (106), the first wall being made of a metal mixture (111) comprising at least lithium and lithium hydride, the metal mixture (111) being liquid when in operation, the first wall further comprising pebbles (110) suspended in the liquid metal mixture (111), each pebble being a neutron attenuating pebble, a neutron multiplying pebble or a neutron attenuating and multiplying pebble.

2. The first wall according to claim 1, wherein the pebbles (110) are sized between 1 and 5 mm.

3. The first wall according to claim 1 or 2, wherein at least one of the pebbles (110) have a core (204) externally coated by an outer shell (202).

4. The first wall according to claim 3, wherein the core (204) is a hollowed core, for example filled with pores (206) and/or the outer shell (202) is a hollowed shell, for example filled with pores.

5. The first wall according to claim 3 or 4, wherein:
- at least one of the pebbles (110) is a neutron attenuating pebble and the core (204) of said neutron attenuating pebble primarily comprises a material suitable for attenuating neutrons, preferably a material of high atomic number, for example lead; and/or
- at least one of the pebbles (110) is a neutron multiplying pebble and the core (204) of said neutron multiplying pebble primarily comprises a material suitable for multiplying neutrons, for example beryllium; and/or
- the outer shell (202) primarily comprises a material suitable for stopping corrosion and/or interaction between lithium and the core (204), for example silicon carbide or graphite.

6. The first wall according to any one of claims 1 to 5, wherein at least some of the pebbles (110) are located at an outer surface (114) of the liquid metal mixture (111).

7. The first wall according to any one of claims 1 to 6, wherein the mixture further comprises lithium tritide and/or lithium deuteride.

8. The first wall according to any one of claims 1 to 7, wherein the mixture comprises between 15 and 25 % in molar content of lithium hydride, lithium tritide and/or lithium deuteride, and the width of the first wall is for example comprised between 60 centimeters and 90 centimeters; or the mixture comprises between 90 % and 98 % in molar content of lithium hydride, lithium tritide and/or lithium deuteride and the width of the first wall is for example comprised between 30 centimeters and 50 centimeters.

9. A vessel (106) comprising an inner wall (113), wherein said inner wall is covered with a first wall according to any one of claims 1 to 8.

10. A first wall device adapted to form a first wall according to any one of claims 1 to 8, wherein the device comprises:
- a vessel (106) comprising an inner wall (113);
- flowing means (102, 104a, 104b) adapted to form a flow of a liquid metal mixture (111) on the inner wall (113); the flowing means comprising means for adding pebbles (110) to the liquid metal mixture, each pebble being a neutron attenuating pebble, a neutron multiplying pebble or a neutron attenuating and multiplying pebble.

11. The device according to claim 10, wherein the flowing means comprises:
- a pump (102);
- a first tube (104a) between the pump and the vessel (106), the first tube being adapted to injecting the liquid metal mixture (111) over the inner wall (113), the first tube being for example divided in at least two parts in the vessel; and
- a second tube (104b) between the vessel (106) and the pump (102), the second tube being adapted to collecting the liquid metal mixture (111) flowing over the inner wall (113), the second tube being for example divided into at least two parts in the vessel.

12. The device according to claim 10 or 11, wherein the flowing means:
- are adapted to circulating the liquid metal mixture (111) at high temperatures, for example at temperatures comprised between 600°C and 900°C; and/or
- comprise means for adding pebbles (110) to the liquid metal mixture (111), for example hatchings or access points in a first tube (104a) of the flowing means.

13. The device according to any one of claims 10 to 12, or the vessel according to claim 9, further comprising electrodes (112) located on the inner wall (113) of the vessel (106), the electrodes being adapted to applying an electric current to the liquid metal mixture (111) of the first wall.

14. The device according to any one of claims 10 to 13, or the vessel according to claim 9 or 13, further comprising means for generating a magnetic field (108) inside the vessel.

15. The device according to any one of claims 10 to 14, or the vessel according to any one of claims 9, 13, 14, wherein the vessel (106) has substantially a shape of a torus.

16. The device according to any one of claims 10 to 15, or the vessel according to any one of claims 9, 13 to 15, wherein the vessel (106) forms at least part of a plasma confinement vessel, a nuclear reactor vessel, or an isotopic separation chamber.

17. A method adapted to form a first wall according to any one of claims 1 to 8, wherein the method comprises:
- injecting a liquid metal mixture (111) to an inner wall (113) of a vessel (106), the liquid metal mixture (111) comprising at least lithium and lithium hydride; and
- injecting pebbles (110) in the liquid metal mixture before or during the injection step, each pebble being a neutron attenuating pebble, a neutron multiplying pebble or a neutron attenuating and multiplying pebble.

18. The method according to claim 17, wherein the method further comprises:
- applicating an electric current to the liquid metal mixture (111) during the injection step, for example through the use of electrodes (112) located on the inner wall (113) of the vessel (106);
- applicating a magnetic field in the vessel (106) during the injection step;
- injecting pebbles (110) in the liquid metal mixture (111) before or during the injection step, each pebble being a neutron attenuating pebble, a neutron multiplying pebble or a neutron attenuating and multiplying pebble; and/or
- collecting the liquid metal mixture (111) from the vessel (106), after the injection step, and servicing the collected liquid metal mixture for another injection step in the vessel (106) and/or to another device adapted to extract energy from said collected liquid metal mixture, such as a heat exchanger or a separator.

## Patentansprüche

1. Eine erste Wand, die geeignet ist, eine Innenwand (113) eines Plasmaeinschlussbehälters (106) zu bedecken, wobei die erste Wand aus einer Metallmischung (111) hergestellt ist, die mindestens Lithium und Lithiumhydrid aufweist, wobei die Metallmischung (111) im Betrieb flüssig ist, wobei die erste Wand ferner Kugeln (110) aufweist, die in der flüssigen Metallmischung (111) suspendiert sind, wobei jede Kugel eine neutronendämpfende Kugel, eine neutronenvervielfachende Kugel oder eine neutronendämpfende und -vervielfachende Kugel ist.

2. Erste Wand nach Anspruch 1, wobei die Kugeln (110) eine Größe zwischen 1 und 5 mm haben.

3. Erste Wand nach Anspruch 1 oder 2, wobei mindestens einer der Kugeln (110) einen Kern (204) aufweist, der von einer Außenhülle (202) ummantelt ist.

4. Erste Wand nach Anspruch 3, wobei der Kern (204) ein ausgehöhlter, beispielsweise mit Poren (206) gefüllter Kern ist und/oder die Außenhülle (202) eine ausgehöhlte, beispielsweise mit Poren gefüllte Hülle ist.

5. Erste Wand nach Anspruch 3 oder 4, wobei:
- mindestens eine der Kugeln (110) eine neutronendämpfende Kugel ist und der Kern (204) der neutronendämpfenden Kugel primär ein zur Dämpfung von Neutronen geeignetes Material, vorzugsweise ein Material mit hoher Ordnungszahl, zum Beispiel Blei, aufweist; und/oder
- mindestens einer der Kugeln (110) eine Neutronenvervielfachungskugel ist und der Kern (204) der Neutronenvervielfachungskugel in erster Linie ein Material aufweist, das zur Vervielfachung von Neutronen geeignet ist, beispielsweise Beryllium; und/oder die äußere Hülle (202) in erster Linie ein Material aufweist, das geeignet ist, die Korrosion und/oder die Wechselwirkung zwischen Lithium und dem Kern (204) zu stoppen, beispielsweise Siliziumkarbid oder Graphit.

6. Erste Wand nach einem der Ansprüche 1 bis 5, wobei zumindest einige der Kugeln (110) an einer äußeren Oberfläche (114) der flüssigen Metallmischung (111) angeordnet sind.

7. Erste Wand nach einem der Ansprüche 1 bis 6, wobei die Mischung ferner Lithiumtritid und/oder Lithiumdeuterid aufweist.

8. Erste Wand nach einem der Ansprüche 1 bis 7, wobei die Mischung zwischen 15 und 25 Mol-% Lithiumhydrid, Lithiumtritid und/oder Lithiumdeuterid aufweist und die Breite der ersten Wand beispielsweise zwischen 60 und 90 Zentimetern liegt; oder die Mischung zwischen 90 und 98 Mol-% Lithiumhydrid, Lithiumtritid und/oder Lithiumdeuterid aufweist und die Breite der ersten Wand beispielsweise zwischen 30 und 50 Zentimetern liegt.

9. Behälter (106) mit einer Innenwand (113), wobei die Innenwand mit einer ersten Wand nach einem der Ansprüche 1 bis 8 bedeckt ist.

10. Eine erste Wand-Vorrichtung zur Bildung einer ersten Wand nach einem der Ansprüche 1 bis 8, wobei die Vorrichtung Folgendes aufweist:
- einen Behälter (106) mit einer Innenwand (113);
- Strömungseinrichtung (102, 104a, 104b), die geeignet ist zum Ausbilden einer Strömung einer flüssigen Metallmischung (111) an der Innenwand (113); wobei die Strömungseinrichtung Mittel zum Hinzufügen von Kugeln (110) zu der flüssigen Metallmischung aufweist, wobei jede Kugel eine neutronenabschwächende Kugel, eine neutronenvervielfachende Kugel oder eine neutronenabschwächende und -vervielfachende Kugel ist.

11. Vorrichtung nach Anspruch 10, wobei die Strömungseinrichtung Folgendes aufweist:
- eine Pumpe (102);
- ein erstes Rohr (104a) zwischen der Pumpe und dem Behälter (106), wobei das erste Rohr geeignet ist zum Einspritzen der flüssigen Metallmischung (111) über die Innenwand (113), wobei das erste Rohr beispielsweise in mindestens zwei Teile im Behälter unterteilt ist; und
- ein zweites Rohr (104b) zwischen dem Behälter (106) und der Pumpe (102), wobei das zweite Rohr geeignet ist zum Auffange der über die Innenwand (113) fließenden flüssigen Metallmischung (111), wobei das zweite Rohr beispielsweise in mindestens zwei Teile im Behälter unterteilt ist.

12. Vorrichtung nach Anspruch 10 oder 11, wobei die Strömungseinrichtung:
- geeignet ist zum Zirkulieren der flüssigen Metallmischung (111) bei hohen Temperaturen, beispielsweise bei Temperaturen zwischen 600°C und 900°C; und/oder
- Mittel zum Hinzufügen von Kugeln (110) zu der flüssigen Metallmischung (111) aufweist, beispielsweise Luken oder Zugangspunkte in einem ersten Rohr (104a) der Strömungseinrichtung.

13. Vorrichtung nach einem der Ansprüche 10 bis 12 oder der Behälter nach Anspruch 9 ferner aufweisend Elektroden (112), die an der Innenwand (113) des Behälters (106) angeordnet sind, wobei die Elektroden so beschaffen sind, dass sie einen elektrischen Strom an die flüssige Metallmischung (111) der ersten Wand anlegen.

14. Vorrichtung nach einem der Ansprüche 10 bis 13 oder der Behälter nach Anspruch 9 oder 13 ferner aufweisend Mittel zum Erzeugen eines Magnetfeldes (108) im Inneren des Behälters.

15. Vorrichtung nach einem der Ansprüche 10 bis 14 oder der Behälter nach einem der Ansprüche 9, 13, 14, wobei der Behälter (106) im Wesentlichen die Form eines Torus hat.

16. Vorrichtung nach einem der Ansprüche 10 bis 15 oder der Behälter nach einem der Ansprüche 9, 13 bis 15, wobei der Behälter (106) zumindest einen Teil eines Plasmaeinschlussbehälters, eines Kernreaktorbehälters oder einer Isotopentrennkammer bildet.

17. Ein Verfahren zur Bildung einer ersten Wand nach einem der Ansprüche 1 bis 8, wobei das Verfahren Folgendes aufweist:
- Einspritzen einer flüssigen Metallmischung (111) in eine Innenwand (113) eines Behälters (106), wobei die flüssige Metallmischung (111) mindestens Lithium und Lithiumhydrid enthält; und
- Einspritzen von Kugeln (110) in die flüssige Metallmischung vor oder während des Einspritzschritts, wobei jede Kugel eine neutronendämpfende Kugel, eine neutronenvervielfachende Kugel oder eine neutronendämpfende und - vervielfachende Kugel ist.

18. Verfahren nach Anspruch 17, wobei das Verfahren ferner Folgendes aufweist:
- Anlegen eines elektrischen Stroms an die flüssige Metallmischung (111) während des Einspritzschritts, beispielsweise durch die Verwendung von Elektroden (112), die sich an der Innenwand (113) des Behälters (106) befinden;
- Anlegen eines Magnetfeldes in dem Behälter (106) während des Einspritzschritts;
- Einspritzen von Kugeln (110) in die flüssige Metallmischung (111) vor oder während des Einspritzschritts, wobei jede Kugel eine neutronendämpfende Kugel, eine neutronenvervielfachende Kugel oder eine neutronendämpfende und -vervielfachende Kugel ist; und/oder
- Sammeln der flüssigen Metallmischung (111) aus dem Behälter (106) nach dem Einspritzschritt und Weiterleiten der gesammelten flüssigen Metallmischung für einen weiteren Einspritzschritt in den Behälter (106) und/oder zu einer anderen Vorrichtung, die geeignet ist, Energie aus der gesammelten flüssigen Metallmischung zu gewinnen, wie z.B. einem Wärmetauscher oder einem Separator.

## Revendications

1. Première paroi adaptée pour recouvrir une paroi interne (113) d'un récipient de confinement de plasma (106), la première paroi étant constituée d'un mélange de métal (111) comprenant au moins du lithium et de l'hydrure de lithium, le mélange de métal (111) étant liquide pendant un fonctionnement, la première paroi comprenant en outre des galets (110) en suspension dans le mélange métallique liquide (111), chaque galet étant un galet atténuateur de neutrons, un galet multiplicateur de neutrons ou un galet atténuateur et multiplicateur de neutrons.

2. Première paroi selon la revendication 1, dans laquelle les galets (110) sont d'une taille comprise entre 1 et 5 mm.

3. Première paroi selon la revendication 1 ou 2, dans laquelle au moins un des galets (110) a un noyau (204) revêtu extérieurement d'une enveloppe extérieure (202).

4. Première paroi selon la revendication 3, dans laquelle le noyau (204) est un noyau creux, par exemple rempli de pores (206) et/ou l'enveloppe extérieure (202) est une enveloppe creuse, par exemple remplie de pores.

5. Première paroi selon la revendication 3 ou 4, dans laquelle :
- au moins un des galets (110) est un galet atténuateur de neutrons et le noyau (204) dudit galet atténuateur de neutrons comprend principalement un matériau apte à atténuer les neutrons, de préférence un matériau à numéro atomique élevé, par exemple du plomb ; et/ou
- au moins un des galets (110) est un galet multiplicateur de neutrons et le noyau (204) dudit galet multiplicateur de neutrons comprend principalement un matériau apte à multiplier les neutrons, par exemple du béryllium ; et/ou
- l'enveloppe extérieure (202) comprend principalement un matériau apte à stopper la corrosion et/ou l'interaction entre le lithium et le noyau (204), par exemple du carbure de silicium ou du graphite.

6. Première paroi selon l'une quelconque des revendications 1 à 5, dans laquelle au moins certains des galets (110) sont situés sur une surface extérieure (114) du mélange de métal liquide (111).

7. Première paroi selon l'une quelconque des revendications 1 à 6, dans laquelle le mélange comprend en outre du triture de lithium et/ou du deutérure de lithium.

8. Première paroi selon l'une quelconque des revendications 1 à 7, dans laquelle le mélange comprend entre 15 et 25 % en teneur molaire d'hydrure de lithium, de triture de lithium et/ou de deutérure de lithium, et la largeur de la première paroi est par exemple comprise entre 60 centimètres et 90 centimètres ; ou le mélange comprend entre 90 % et 98 % en teneur molaire d'hydrure de lithium, de triture de lithium et/ou de deutérure de lithium et la largeur de la première paroi est par exemple comprise entre 30 centimètres et 50 centimètres.

9. Récipient (106) comprenant une paroi interne (113), dans lequel ladite paroi interne est recouverte d'une première paroi selon l'une quelconque des revendications 1 à 8.

10. Dispositif de première paroi adapté pour former une première paroi selon l'une quelconque des revendications 1 à 8, dans lequel le dispositif comprend :
- un récipient (106) comprenant une paroi interne (113) ;
- des moyens d'écoulement (102, 104a, 104b) adaptés pour former un écoulement d'un mélange métallique liquide (111) sur la paroi interne (113) ; les moyens d'écoulement comprenant des moyens pour ajouter des galets (110) au mélange métallique liquide, chaque galet étant un galet atténuateur de neutrons, un galet multiplicateur de neutrons ou un galet atténuateur et multiplicateur de neutrons.

11. Dispositif selon la revendication 10, dans lequel les moyens d'écoulement comprennent :
- une pompe (102) ;
- un premier tube (104a) entre la pompe et le récipient (106), le premier tube étant adapté pour injecter le mélange de métal liquide (111) sur la paroi interne (113), le premier tube étant par exemple divisé en au moins deux parties dans le récipient ; et
- un deuxième tube (104b) entre le récipient (106) et la pompe (102), le deuxième tube étant adapté pour recueillir le mélange métallique liquide (111) s'écoulant sur la paroi interne (113), le deuxième tube étant par exemple divisé en au moins deux parties dans le récipient.

12. Dispositif selon la revendication 10 ou 11, dans lequel les moyens d'écoulement :
- sont adaptés pour faire circuler le mélange métallique liquide (111) à des températures élevées, par exemple à des températures comprises entre 600 °C et 900 °C ; et/ou
- comprennent des moyens d'ajout de galets (110) au mélange métallique liquide (111), par exemple des trappes ou des points d'accès dans un premier tube (104a) des moyens d'écoulement.

13. Dispositif selon l'une quelconque des revendications 10 à 12, ou récipient selon la revendication 9, comprenant en outre des électrodes (112) situées sur la paroi interne (113) du récipient (106), les électrodes étant adaptées pour appliquer un courant électrique au mélange de métal liquide (111) de la première paroi.

14. Dispositif selon l'une quelconque des revendications 10 à 13, ou récipient selon la revendication 9 ou 13, comprenant en outre des moyens pour générer un champ magnétique (108) à l'intérieur du récipient.

15. Dispositif selon l'une quelconque des revendications 10 à 14, ou récipient selon l'une quelconque des revendications 9, 13, 14, dans lequel le récipient (106) a sensiblement la forme d'un tore.

16. Dispositif selon l'une quelconque des revendications 10 à 15, ou récipient selon l'une quelconque des revendications 9, 13 à 15, dans lequel le récipient (106) forme au moins une partie d'un récipient de confinement de plasma, d'un récipient de réacteur nucléaire ou d'une chambre de séparation isotopique.

17. Procédé adapté pour former une première paroi selon l'une quelconque des revendications 1 à 8, dans lequel le procédé comprend :
- l'injection d'un mélange de métal liquide (111) dans une paroi interne (113) d'un récipient (106), le mélange de métal liquide (111) comprenant au moins du lithium et de l'hydrure de lithium ; et
- l'injection de galets (110) dans le mélange métallique liquide, avant ou pendant l'étape d'injection, chaque galet étant un galet atténuateur de neutrons, un galet multiplicateur de neutrons ou un galet atténuateur et multiplicateur de neutrons.

18. Procédé selon la revendication 17, dans lequel le procédé comprend en outre :
- l'application d'un courant électrique au mélange de métal liquide (111) pendant l'étape d'injection, par exemple grâce à l'utilisation d'électrodes (112) situées sur la paroi interne (113) du récipient (106) ;
- l'application d'un champ magnétique dans le récipient (106) pendant l'étape d'injection ;
- l'injection de galets (110) dans le mélange de métal liquide (111) avant ou pendant l'étape d'injection, chaque galet étant un galet atténuateur de neutrons, un galet multiplicateur de neutrons ou un galet atténuateur et multiplicateur de neutrons ; et/ou
- la collecte du mélange de métal liquide (111) à partir du récipient (106), après l'étape d'injection, et l'acheminement du mélange de métal liquide collecté vers une autre étape d'injection dans le récipient (106) et/ou vers un autre dispositif adapté pour extraire de l'énergie dudit mélange de métal liquide collecté, tel qu'un échangeur de chaleur ou un séparateur.
